Europäisches Patentamt

European Patent Office

Office européen des brevets

(19)

(11) Veröffentlichungsnummer: **0 276 268 B1**

# (12) EUROPÄISCHE PATENTSCHRIFT

(45) Veröffentlichungstag der Patentschrift:
27.03.91 Patentblatt 91/13

(51) Int. Cl.$^5$: **G01B 11/27**, G01B 11/00,
G01D 3/08, G05B 19/18

(21) Anmeldenummer: 87904868.4

(22) Anmeldetag: 20.07.87

(86) Internationale Anmeldenummer:
PCT/EP87/00395

(87) Internationale Veröffentlichungsnummer:
WO 88/01045 11.02.88 Gazette 88/04

(54) ELEKTROOPTISCHE VORRICHTUNG FÜR DIE DAUERÜBERWACHUNG DER GEGENSEITIGEN RÄUMLICHEN LAGE ZWEIER MASCHINEN ODER MASCHINENTEILE.

(30) Priorität: 29.07.86 DE 3625641

(43) Veröffentlichungstag der Anmeldung:
03.08.88 Patentblatt 88/31

(45) Bekanntmachung des Hinweises auf die
Patenterteilung:
27.03.91 Patentblatt 91/13

(84) Benannte Vertragsstaaten:
DE FR GB IT SE

(56) Entgegenhaltungen:
GB-A- 2 060 871
GB-A- 2 062 856
US-A- 4 504 920

(73) Patentinhaber: PRÜFTECHNIK DIETER
BUSCH + PARTNER GmbH & CO
Oskar-Messter-Strasse 19-21
W-8045 Ismaning (DE)

(72) Erfinder: BUSCH, Dieter
Am Isarberg 1
W-8045 Ismaning (DE)

(74) Vertreter: Hieke, Kurt
Stadlerstrasse 3
W-8013 Haar bei München (DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf elektrooptische Vorrichtungen gemäß dem Oberbegriff des Patentanspruchs 1 und gemäß dem Oberbegriff des Patentanspruchs 2.

Elektrooptische Vorrichtungen mit den Merkmalen a), b) und c) gemäß dem Oberbegriff des Patentanspruchs 1 sind beispielsweise aus WO 84/04960 und aus der DE-OS 34 19 059.7 bekannt. Die erstere eignet sich zur Überwachung des Fluchtungszustandes von miteinander gekoppelten Wellen von Maschinen, z.B. der Welle eines Antriebsmotors und der Welle eines Generators, und die andere ist generell für die Überwachung der gegenseitigen Ausrichtung gesondert montierter Maschinen oder Maschinenteile geeignet. Bei der letzteren ist zur Information des Bedienungs- und Überwachungspersonals eine Einrichtung gemäß dem Merkmal d) des Oberbegriffs des Patentanspruchs 1 vorgesehen, die sich allgemein auch für anderweitige bekannte Einrichtungen mit den gattungsgemäßen Merkmalen a), b) und c) eignet.

Elektrooptische Einrichtungen mit den Merkmalen a) und b) gemäß dem Oberbegriff des Patentanspruchs 2 sind beispielsweise aus der US-PS 4, 518, 855 bekannt. Vorrichtungen dieser Gattung vermögen ebenfalls generell die gegenseitige Ausrichtung gesonderter Maschinen oder Maschinenteile zu überwachen. Auch sie können prinzipiell mit einer Einrichtung gemäß dem Merkmal c) des Oberbegriffs des Patentanspruchs 2, das mit dem Merkmal d) des Oberbegriffs des Patentanspruchs 1 identisch ist, zusammenarbeiten.

Die Einrichtung gemäß dem Merkmal d) bzw. c) der Oberbegriffe der Patentansprüche 1 und 2 kann außer den den Ausrichtzustand betreffenden Informationen noch andere, hiervon unabhängige Informationen wie z.B. eine Kennummer des elektrooptischen Systems, auf Abruf zur Verfügung stellen, was insbesondere von Bedeutung ist, wenn das elektrooptische System zusammen mit anderen solchen Systemen an eine zentrale EDV angeschlossen ist.

Bisher mußten die abrufbaren Informationen für die Verwendung von Einrichtungen der vorgenannten Art bei Vorrichtungen mit den restlichen Merkmalen der Oberbegriffe der Patentansprüche 1 und 2 mittels einer in die jeweilige Einrichtung eingebauten, von Hand bedienbaren Schalteinrichtung irgend einer hierfür bekannten Ausführung unter zyklischer Weiterschaltung von einer Information zur nächsten in vorgegebener Reihenfolge abgerufen werden. Bei der Wahl der Schalteinrichtung war in Betracht zu ziehen, daß die gattungsgemäßen elektrooptischen Vorrichtungen häufig unter kritischen Umgebungsbedingungen zu arbeiten haben, die einen möglichst gekapselten Aufbau aller Bauteile einschließlich der elektronischen Datenverarbeitungseinrichtung erfordern. Zu den bekannten Schalteinrichtungen, die in diesem Zusammenhang besonders gut geeignet sind, gehören kapazitive und induktive Schalter, sowie nach Art von Lichtschranken ausgeführte Schalter, die bisher zusätzlich zu den anderen funktionellen Elementen der Datenverarbeitungseinrichtung in funktioneler Hinsicht vollständig gesondert eingesetzt wurden. Dabei bereitete es häufig, insbesondere bei beengten räumlichen Verhältnissen, Schwierigkeiten, einen einerseits unbehinderten, andererseits aber auch gegen unbeabsichtigte Betätigung gesicherten Zugriff zu der Schalteinrichtung sicherzustellen, zumal der Hersteller der elektrooptischen Vorrichtungen meistens nicht die besonderen individuellen Verhältnisse am Einsatzort kannt.

Der Erfindung liegt demgemäß die Aufgabe zugrunde, Vorrichtungen gemäß den Oberbegriffen der Patentansprüche 1 und 2 zu schaffen, bei denen jederzeit einerseits ein unbehinderter willkürlicher Abruf der abrufbaren Informationen möglich ist und andererseits ein unbeabsichtigter Abruf dieser Informationen weitestgehend ausgeschlossen ist, und zwar unter Beibehaltung der völlig gekapselten und damit Umgebungseinflüssen weitgehend entzogenen bekannten Bauweise der Komponenten des elektrooptischen Systems.

Die vorstehende Aufgabe wird durch die Einrichtungen gemäß Patentansprüchen 1 und 2 gelöst.

Die in den Kennzeichnenden Teilen der Ansprüche 1 und 2 gennanten erfindungsgemäßen Merkmale haben die Wirkung, daß bei willkürlicher Unterbrechung oder – alternativ – deutlicher willkürlicher Intensitätsschwächung des Lichtstrahls an irgendeiner Stelle, sich diese Unterbrechung oder Intensitätsschwächung in der Kenngröße des Intensitätssignals äußert und in der Datenverarbeitungseinrichtung so den Abruf der im Zyklus vorgesehenen nächsten Information auslöst. Die Weiterschaltung des zyklischen Abrufs von Information zu Information in der vorgegebenen Reihenfolge ist also einfach dadurch möglich, daß jedesmal ein die Intensität des Lichtstrahls deutlich änderndes Hindernis, beispielsweise die Hand eines Benutzers, kurzzeitig eingebracht wird, wofür in aller Regel ein ausreichender, gut zugänglicher Raum zur Verfügung steht, weil das bei den Vorrichtungen gemäß den Gattungsbegriffen zur Anwendung gelangende elektrooptische Meßprinzip als solches einer bestimmten Mindestlänge des Lichtstrahls bzw. der Lichtstrahlen bedarf. Da vom Benutzer zur Sicherstellung zuverlässiger Meßergebnisse der elektrooptischen Messung ohnehin Maßnahmen getroffen werden müssen, die eine unbeabsichtigte Störung des Strahlenganges des Lichtstrahls ausschließen, stellen diese Maßnahmen ohne weiteres Zutun auch sicher, daß ein unbeabsichtigter Informationsabruf nicht stattfinden kann.

Durch die erfindungsgemäß vorgesehene Ausnutzung funktioneller Elemente des Meßsystems für die Schaltfunktion ist überdies die Fehleranfälligkeit der gesamten Vorrichtung erheblich herabgesetzt, weil eine gesonderte Schalteinrichtung, die für sich ausfallen könnte, in Fortfall gekommen ist. Gerade die üblichen Schaltelemente versagen häufig in elektrischen und elektronischen Schaltungen als erstes.

Die abhängigen Ansprüche betreffen vorteilhafte Ausgestaltungen des Gegenstandes des Hauptanspruchs.

Mit Maßnahmen gemäß Anspruch 4 kann z.B. die Innentemperatur von Strahlsender und Strahlempfänger oder auch die einwandfreie Arbeitsweise des elektrooptischen Meßsystems oder das Auftreten bestimmter Fehler überwacht und zur Anzeige gebracht werden.

Die Maßnahme gemäß Anspruch 5 stellt sicher, daß eine bestimmte Zeit nach einem zyklischen "Durchblättern" der verfügbaren Informationen automatisch wieder die Information zur Anzeige gebracht wird, mit der der nächste Zyklus wieder beginnen soll.

Die Erfindung wird nachstehend anhand der Zeichnung an einem Ausführungsbeispiel noch näher erläutert. In der Zeichnung zeigt :

Fig. 1 die Vorrichtung gemäß DE-OS 34 19 059.7 in Ansicht von der Seite,

Fig. 2a einen Querschnitt durch den bei der Vorrichtung nach Fig. 1 als Strahlempfänger eingesetzten analogen photoelektrischen Halbleiter-Positionsdetektor zur Darstellung des Funktionsprinzips,

Fig. 2b den Positionsdetektor nach Fig. 2a in zweiachsiger Ausführung von vorn gesehen,

Fig. 2c den Querschnitt durch den Detektor gemäß Fig. 2b entlang der Schnittlinie IIc-IIc in Fig. 2b, und

Fig. 3 das Schaltbild einer Schaltungsanordnung zum Gewinnen des elektrischen Signals mit der Intensitätskenngröße aus den vom Strahlempfänger gelieferten Signalen mit den Positionskenngrößen.

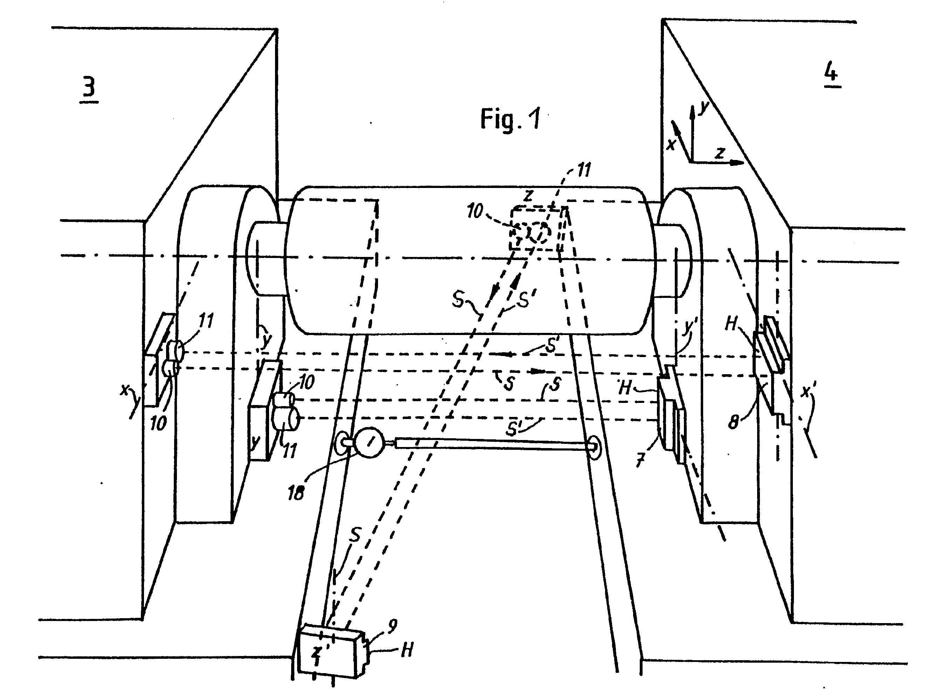

Zur Erläuterung des Ausführungsbeispieles der erfindungsgemäßen Vorrichtung wird von einer bekannten Vorrichtung gemäß dem Oberbegriff des Patentanspruchs 1, und zwar von derjenigen gemäß der DE-OS 34 19 059 ausgegangen. Die Fig. 1 zeigt diese Vorrichtung in Ansicht von der Seite.

Gemäß Fig. 1 handelt es sich bei den Maschinen, deren Relativposition überwacht werden soll, um zwei gesondert aufgestellte Drehmaschinen 3 und 4, von denen die eine z.B. ein Motor und die andere z.B. ein Gererator sein kann, deren Wellen gekoppelt sind. Vor der Inbetriebnahme der Maschinen 3 und 4 wurden diese so in Bezug aufeinander ausgerichtet, daß die Wellen genau fluchten.

Zur Daueruberwachung der gegenseitigen Position der Maschinen 3 und 4 in dem durch das räumliche, rechtwinklige, Koordinatensystem X, Y, Z bestimmten Raum sind an den beiden Maschinen 3 und 4 drei im einzelnen nicht näher dargestellte Prismen 7, 8 und 9 angebracht, von denen jedes eine andere von den drei Koordinatenachsrichtungen X, Y und Z auf gegenseitige Drehung der Maschinen 3 und 4 um diese Achsrichtung bzw. auf gegenseitige Parallelverschiebung dieser Maschinen in dieser Achsrichtung, also auf Parallelversatz und Winkelversatz bezüglich der zugehörigen Achsrichtung überwacht. An der jeweils anderen Maschine 3 bzw. 4 ist zu jedem Prisma 7, 8, 9 ein Strahlsender angebracht, der einem scharf gebündelten Lichtstrahl S etwa senkrecht auf die Hypothenusenebene des zugehörigen Prismas wirft. Des weiteren ist zu jedem Prisma 7, 8, 9 an der jeweils anderen Maschine ein Strahlempfänger 11 starr befestigt, der den vom zugehörigen Prisma reflektierten Lichtstrahl S' empfängt und ein der Ablage des Lichtstrahlauftreffpunktes von einem festen Bezugspunkt nach Größe und Richtung entsprechendes Signal liefert.

In der in der DE OS 34 19 059.7 ausführlich geschilderten Weise werden die auf die Prismen 7, 8, 9 einfallenden Lichtstrahlen S von den letzteren jeweils so reflektiert, daß der Lichtstrahl-Auftreffpunkt des reflektierten Strahls S' in einer zum Lichtstrahl etwa senkrechten Meßebene in einer bestimmten Richtung bezüglich eines Bezugspunktes in der Meßebene auswandert, wenn die Maschinen 2 und 3 um eine von dem jeweiligen Prisma überwachte Achse einen Winkelversatz erfahren, und daß der Lichtstrahl-Auftreffpunkt in einer dazu senkrechten Richtung auswandert, wenn die beiden Maschinen 2, 3 relativ zueinander in Richtung der überwachten Achse einen Parallelversatz erhalten, wobei jedes der Prismen jeweils einer anderen von den drei Koordinatenachsen X, Y, und Z zugeordnet ist.

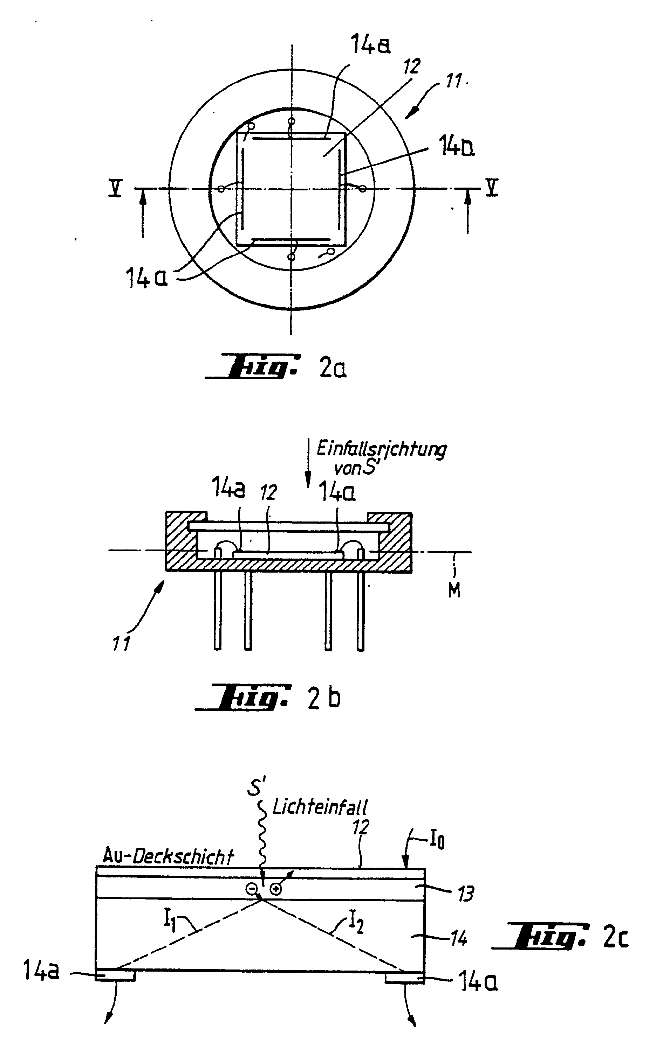

Die Fig. 2a-2c zeigen den bei der Vorrichtung nach Fig. 1 zur Anwendung gelangenden Strahlempfänger 11 in näheren Einzelheiten.

Dieser ist ein zweiachsiger, analoger, photoelektrischer Halbleiter-Positions-Detektor und weist eine Deckschicht 12 aus Gold, darunter eine Verarmungszone 13, und wiederum darunter, ein hochohmiges Substrat 14 auf, wobei der Gold-Deckschicht 12 ein Strom $I_0$ zugeführt wird und am hochohmigen Substrat seitlich sowie oben und unten Kontaktstreifen 14a entlang des im wesentlichen quadratischen Querschnitts des Substrats angeordnet sind, über die der zugeführte Strom $I_0$ in Teilströme aufgeteilt abfließt. Die Aufteilung des Stromes $I_0$ richtet sich nach der Stelle des Lichteinfalls, mit der der reflektierte Lichtstrahl S' auf die Gold-Deckschicht im wesentlichen senkrecht auftrifft. In der Ausführung nach Fig. 2b und 2c als zweiachsiger Positions-Detektor wird der zugeführte Strom $I_0$ in vier Teilströme $I_1$, $I_2$, $I_3$, $I_4$ aufgeteilt, die über die einzelnen Kontaktstreifen 14a abfließen und hinsichtlich ihrer Größe von Abstand und Richtung der Ablage abhängen, die der Lichtstrahlauftreffpunkt vom Zentrum hat. Wenn der Strahl also genau in der Mitte der mit der Verarmungszone und dem Substrat deckungsgleichen, quadratischen Gold-Deckschicht auftrifft, was vorzugsweise durch entsprechende Justierung der Anordnung in der Ausgangsposition der Maschinen 3 und 4 der Fall ist, sind die vier Teilströme untereinander gleich groß. Aus einer eventuellen Stromdifferenz an den in Bezug aufeinander gegenüberliegenden Paaren von Kontaktstreifen 14a sind die rechtwinkligen Komponenten des Abstandes eines außermittigen Lichtauftreffpunktes von der Koordinatenmitte ablesbar, und damit nach Winkelversatz und Parallelversatz hinsichtlich der zugehörigen Koordinatenachsrichtung eine sich im Betriebe eventuell einstellende Abweichung der relativen Maschinenposition von der Ausgangslage.

Positions-Detektoren der vorstehend geschilderten Art sind bekannt und im Handel erhältlich.

Die Lichtempfänger 11 gemäß Fig. 2a bis 2c sind an der Maschine so angeordnet, daß die durch sie bewirkte Zerlegung des Vektors der Ablage des Auftreffpunktes vom Nullpunkt in rechtwinklige Komponenten mit der zugehörigen Achsrichtung des räumlichen Koordinatensystems übereinstimmt.

Die elektrooptische Überwachungsvorrichtung liefert also im Betriebe permanent Signale, die Positionskenngrößen – hier in Form der Größe eines Stromes – beinhalten, die die relative Position der Maschinen 3 und 4 in Bezug auf eine anfängliche Ausgangsposition kennzeichnen und in ein elektronisches Datenverarbeitungsgerät 15 eingegeben werden, das eine permanente Information über den Ausrichtungszustand zur abrufbaren Anzeige auf einer alphanumerischen Anzeigeeinrichtung 16 liefert. Durch Eingabe der Maschinendaten hinsichtlich der genauen Lage der Befestigungspunkte am Fundament in Bezug aufeinander kann das elektronische Datenverarbeitungsgerät anhand der von dem Lichtempfänger empfangenen Signale auch mit die Art und Größe der an den einzelnen Auflagepunkten vorzunehmenden Korrekturen errechnen, die zur Beseitigung einer eingetretenen Fehlausrichtung führen, und zum Abruf in die Anzeigeeinrichtung bereitstellen. Der Benutzer ist dann in der Lage, jederzeit eine gefährliche Fehlausrichtung ohne weitere Meßhilfen sofort durch entsprechende, ihm von dem Datenverarbeitungsgerät bekanntgegebenen Gegenmaßnahmen zu beseitigen.

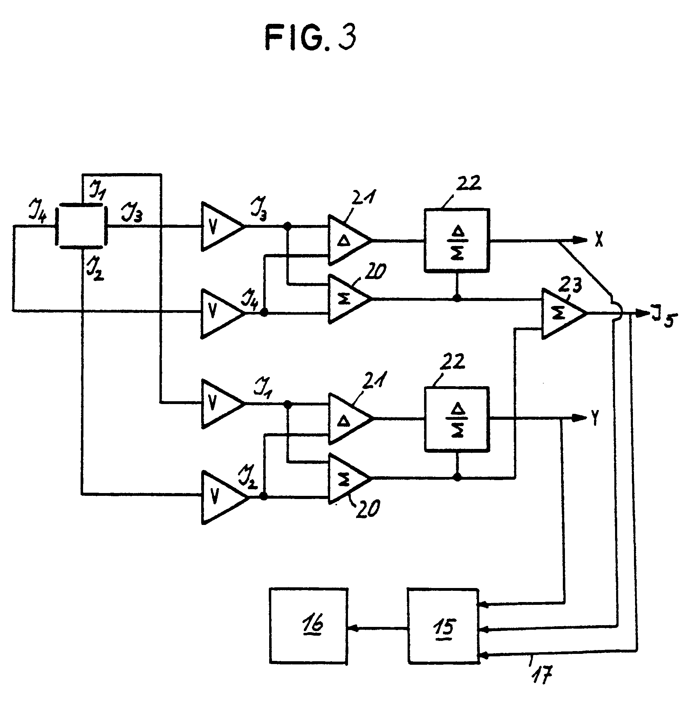

Häufig kommt es, wie im Falle von gesondert aufgestellten Drehmaschinen mit gekoppelten Wellen, nur auf Fehlausrichtungen bezüglich Achsrichtungen an, die eine zu einer vorgegebenen Achse, hier der Mittelachse der Maschinenwelle, senkrechte Ebene festlegen. In diesem Falle werden nur zwei Prismen, bei der Maschinenordnung nach Fig. 1 die Prismen 7 und 8, mit jeweils zugehörigem Lichtsender 10 und Strahlempfänger 11 benötigt. Eine für den Betrieb der Drehmaschinen nach Fig. 3 und 4 weitaus weniger gefährliche axiale Verlagerung in der z-Richtung kann auf irgendeine andere Weise, beispielsweise mittels einer Meßuhr 30, festgestellt werden.

In das Datenverarbeitungsgerät können auch noch andere Meßsignale eingegeben werden, die Kenngrößen aufweisen, die für den Betriebszustand der Überwachungsvorrichtung charakteristisch sind (Zustandskenngrößen), aus denen das Datenverarbeitungsgerät dann Informationen über den Betriebszustand zur Darstellung an der alphanumerischen Anzeigeeinrichtung 16 abrufbar bereitstellt. Die Einrichtungen, die diese Signale liefern, können mit dem Strahlempfänger 11 kombiniert und mit diesem in einem gemeinsamen Gehäuse untergebracht sein.

Das elektronische Datenverarbeitungsgerät ist so eingerichtet, daß es in einem vorgegebenen Zyklus die einzelnen, von ihm zur Darstellung an der alphanumerischen Anzeigeeinrichtung 16 bereitgestellten Informationen in einer bestimmten festgelegten Reihenfolge nacheinander dann ausgibt, wenn es von Information zu Information hierzu einen Befehl erhält. Diesen Befehl bedingt ein Signal, das aus dem die Positionskenngrößen beinhaltenden, von dem Strahlempfänger gelieferten Signalen abgeleitet wird und eine für die Intensität des auf den Strahlempfänger einfallenden Lichtstrahles S' und/oder das Vorhandensein oder Fehlen des Lichtstrahles charakteristische Kenngröße, die als Intensitätskenngröße bezeichnet wird, aufweist, wobei der Befehl für die Weiterschaltung der Informationsanzeige jeweils dann ausgelöst wird, wenn die Kenngröße einen Wert hat, der einer im normalen Betrieb nicht auftretenden Schwächung des Lichtstrahles oder dem Fehlen des Lichtstrahles entspricht. Dieser Wert der Kenngröße kann von einem Benutzer, der die nächste Information abfragen möchte, offensichtlich leicht dadurch bewirkt werden, daß er in den Lichtstrahl vor dem Strahlempfänger 11 ein Hindernis einbringt, das ihn unterbricht oder zumindest erheblich schwächt, z.B. seine Hand.

Das Signal mit der Intensitätskenngröße wird aus dem vom Strahlempfänger 11 gelieferten Signalen mit den Positionskenngrößen in der in Fig. 3 dargestellten Schaltung gebildet und über die Leitung 17 in das elektronische Datenverarbeitungsgerät 15 eingegeben, das fähig ist, den Befehl zur Weiterschaltung der Informationsanzeige beim Auftreten des zugehörigen vorbestimmten Intensitätskennwertes zu erzeugen. Außerdem ist das elektronische Datenverarbeitungsgerät 15 so eingerichtet bzw. programmiert, daß es für den nächsten Abruf eine vorbestimmte erste Information der im Zyklus nacheinander abrufbaren Informationen bereitstellt, wenn die Intensitätskenngröße ihren das Vorhandensein des ungeschwächten Lichtstrahles S' im normalen Betrieb kennzeichnenden Wert über eine vorgegebene, wählbare Zeit aufwies, so daß nach dieser Zeit, während welcher keine Schwächung oder Unterbrechung des Lichtstrahls stattgefunden hat, bei einem nächsten Abruf wieder mit der ersten Information im Zyklus begonnen wird.

Die Fig. 3 zeigt im einzelnen eine Ausführungsform der Schaltung zum Bilden des Signales mit der Intensitätskenn-größe aus den vom Strahlempfänger 11 gemäß Fig. 2a-2c gelieferten Signalen mit den Positionskenngrößen, den Strömen $I_1$, $I_2$, $I_3$ und $I_4$. Von dem Strahlempfänger 11 sind in Fig. 3 nur die vier Kontaktstreifen 14a dargestellt.

Die von den Kontaktstreifen 14a fließenden Ströme $I_1$-$I_4$ werden nach Verstärkung durch einen Verstärker V in zusammengehörenden Paaren $I_1$, $I_2$ bzw. $I_3$, $I_4$ jeweils einem sie addierenden Summierglied 20 und einem sie subtrahierenden Differenzglied 21 zugeführt. Die Ausgänge des Summiergliedes 20 und des Differenzgliedes 21 für ein zusammengehörendes Strompaar sind jeweils an die Eingänge eines Quotienten-Gliedes 22 angeschlossen, das einen Strom liefert, der zu dem Quotienten aus der Differenz der Ströme $I_3$, $I_4$ bzw. $I_1$, $I_2$ und der Summe der Ströme $I_3$, $I_4$ bzw. $I_1$, $I_2$ proportional ist und der Ablagekomponente x bzw. y des Vektors der Ablage des Lichtstrahlauftreffpunktes von dem Bezugspunkt in der Meßebene des Lichtempfängers 11 entspricht.

Die Summierglieder 20 der beiden Strompaare sind außerdem ausgangsseitig an den einen bzw. den anderen Eingang eines weiteren Summiergliedes 23 angeschlossen, das somit die Summe $I_1 + I_2 + I_3 + I_4$ bildet und ausgangsseitig den hierzu proportionalen Strom $I_5$ an das Datenverarbeitungsgerät 15 als für die Intensität des Lichtstrahles S' charakteristische Intensitätskenngröße an das Datenverarbeitungsgerät 15 liefert. Es ist offensichtlich, daß diese Intensitätskenngröße in Form des Stromes $I_5$ im normalen Betrieb der Überwachungseinrichtung einen im wesentlichen gleichbleibenden, von der jeweiligen Ablage des Lichtstrahlauftreffpunktes vom Nullpunkt des Lichtempfängers 11 unabhängigen Wert hat, weil sich die Ströme der einzelnen Strompaare ablagebedingt so aufteilen, daß einem Zuwachs des einen Stromes eine im wesentlichen gleiche Abnahme des anderen Stromes entspricht, die Stromsumme also erhalten bleibt. Wird der einfallende Lichtstrahl hingegen ungewöhnlich geschwächt oder gar unterbrochen, gehen alle vier Ströme im gleichen Maße zurück oder kommen gar gänzlich in Fortfall, so daß in diesem, und nur in diesem Falle, die Intensitätskenngröße in Form des Stromes $I_5$ den Wert erreicht, der die Befehlsauslösung zum Weiterschalten der abrufbaren Informationen in dem Datenverarbeitungsgerät 15 auslöst.

Auf die vorstehend geschilderte Weise sind die einzelnen Informationen über die gesamte Länge des Lichtstrahles S', die bei der Überwachung von weit entfernt aufgestellten Objekten sehr groß sein kann,

fernbedient weiterschaltbar.

**Ansprüche**

1. Elektrooptische Einrichtung für die Dauerüberwachung der gegenseitigen räumlichen Relativposition zweier Maschinen (3, 4) oder Maschinenteile, mit

   a) einer an der einen Maschine (3) bzw. dem einen Maschinenteil starr montierten Strahlsender (10), der einen scharf gebündelten primären Lichtstrahl (S) aussendet,

   b) einem starr an der anderen Maschine (4) bzw. dem anderen Maschinenteil montierten Spiegelsystem (7, 8), das den primären Lichtstrahl (S) empfängt und als sekundären Lichtstrahl (S') in von der Relativposition abhängiger Weise reflektiert,

   c) einem an der einen Maschine (3) bzw. dem einen Maschinenteil montierten Strahlempfänger (11), der den sekundären Lichtstrahl (S') empfängt und elektrische Signale mit von dessen Einfallsbedingungen abhängigen Positionskenngrößen erzeugt, und

   d) einer die elektrischen Signale des Strahlempfängers (11) auswertenden elektronischen Datenverarbeitungsanlage (15) mit alphanumerischer Anzeige (16) zur abrufbaren Darstellung von Informationen über die Relativposition und-/oder Änderungen der Relativposition und/oder Korrekturmaßnahmen zur Beseitigung von Änderungen der Relativposition und ggf. anderen, aus weiteren eingegebenen Signalen und/oder Daten emittelten Informationen, **dadurch gekennzeichnet,**

   e) daß eine Einrichtung (20-22) zur Erzeugung einer Intensitätskenngröße ($I_5$) vorgesehen ist, die so angeordnet und ausgebildet ist, daß die Intensitätskenngröße ($I_5$) aus den vom Strahlempfänger (11) gelieferten Signalen mit den Positionskenngrößen ($I_1$, $I_2$, $I_3$, $I_4$) gebildet wird und entweder von der Intensität des empfangenen sekundären Lichtstrahls (S') abhängt oder angibt, ob ein sekundärer Lichtstrahl (S') empfangen wird, und daß die Datenverarbeitungsanlage (15) so ausgebildet ist, daß sie diese Intensitätskenngröße ($I_5$) für den zyklischen Abruf der Informationen heranzieht.

2. Elektrooptische Einrichtung für die Dauerüberwachung der gegenseitigen räumlichen Relativposition zweier Maschinen oder Maschinenteile, mit

   a) einer an der einen Maschine bzw. dem einen Maschinenteil starr montierten Strahlsender, der einen scharf gebündelten Lichtstrahl aussendet,

   b) einem starr an der anderen Maschine bzw. dem anderen Maschinenteil montierten Strahlempfänger, der den Lichtstrahl unter Einfallsbedingungen empfängt, die von der Relativposition der Maschinen oder Maschinenteile abhängig sind, und der elektrische Signale mit von den Einfallsbedingungen abhängigen Positionskenngrößen ($I_1$, $I_2$, $I_3$, $I_4$) erzeugt, und

c) einer die elektrischen Signale des Strahlempfängers auswertenden elektronischen Datenverarbeitungsanlage (15) mit alphanumerischer Anzeige (16) zur abrufbaren Darstellung von Informationen über die Relativposition und/oder Änderungen der Relativposition und/oder Korrekturmaßnahmen zur Beseitigung von Änderungen der Relativpostition und ggf. anderen, aus weiteren eingegebenen Signalen und/oder Daten ermittelten Informationen, **dadurch gekennzeichnet,**

d) daß eine Einrichtung (20-22) zur Erzeugung einer Intensitätskenngröße ($I_5$) vorgesehen ist, die so angeordnet und ausgebildet ist, daß die Intensitätskenngröße ($I_5$) aus den vom Strahlempfänger gelieferten Signalen mit den Positionskenngrößen ($I_1$, $I_2$, $I_3$, $I_4$) gebildet wird und entweder von der Intensität des empfangenen Lichtstrahls abhängt oder angibt, ob ein Lichtstrahl empfangen wird, und daß die Datenverarbeitungsanlage so ausgebildet ist, daß sie diese Intensitätskenngröße ($I_5$) für den zyklischen Abruf der Informationen heranzieht.

3. Elektrooptische Einrichtung nach Anspruch 1 oder 2, **dadurch gekennzeichnet,** daß mindestens die Maschine (3) bzw. der Maschinenteil, die/der den Strahlempfänger (11) trägt, im Raume feststeht, und daß die Datenverarbeitungsanlage (15) mit der alphanumerischen Anzeige (16) und dem Strahlempfänger (11) zu einer Baueinheit zusammengefaßt ist.

4. Elektrooptische Einrichtung nach einem der vorhergehenden Ansprüche, dadurch gekennzeichnet, daß der Strahlempfänger (11) mit Einrichtungen zum Überwachen des Betriebszustandes des elektrooptischen Systems kombiniert ist, die elektrische Signale mit für den Betriebszustand charakteristischen Zustandskenngrößen an die Datenverarbeitungsanlage (15) liefert, die diese zu entsprechenden abrufbaren Informationen verarbeitet.

5. Elektrooptische Einrichtung nach einem der vorhergehenden Ansprüche, dadurch gekennzeichnet, daß die elektronische Datenverarbeitungsanlage (15) so programmiert ist, daß eine vorgegebene Information als Ausgangsinformation für einen anschließenden zyklischen Abruf von vorgegebener Reihenfolge zur Darstellung auf der alphanumerischen Anzeige (16) abgerufen wird, wenn die Intensitätskenngröße ($I_5$) über eine vorbestimmte Zeitspanne hinweg einen vorgegebenen Wert gehabt hat.

## Claims

1. Electro-optical equipment, for the continuous monitoring of the mutual spatially relative position of two machines (3, 4) or machine parts, with

   a) a beam transmitter (10), which is rigidly mounted at the one machine (3) or the one machine part and emits a sharply focused primary light beam (S),

   b) a mirror system (7, 8), which is rigidly mounted at the other machine (4) or the other machine part and receives the primary light beam (S) and reflects it as secondary light beam (S') in a manner dependent on the relative position,

   c) a beam receiver (11), which is mounted at the one machine (3) or the one machine part and receives the secondary light beam (S') and produces electrical signals with position characteristic magnitudes in dependence on its conditions of incidence,

   d) an electronic data processing installation (15), which evaluates the electrical signals of the beam receiver (11), with alphanumeric indicator (16) for the recallable representation of information data about the relative position and/or changes in the relative position and/or correction measures for the elimination of changes in the relative position and, in a given case, other information data determined from further entered signals and/or data, characterised thereby,

   e) that an equipment (20 to 22) for the production of an intensity characteristic magnitude ($I_5$) is provided and so arranged and constructed that the intensity characteristic magnitude ($I_5$) is formed out of the signals, with the position characteristic magnitudes ($I_1$, $I_2$, $I_3$, $I_4$), supplied by the beam receiver (11) and either depends on the intensity of the received secondary light beam (S') or indicates whether a secondary light beam (S') is being received and that the data processing installation (15) is so constructed that it draws on this intensity characteristic magnitude ($I_5$) for the cyclical recall of the information data.

2. Electro-optical equipment, for the continuous monitoring of the mutual spatially relative position of two machines or machine parts, with

   a) a beam transmitter, which is rigidly mounted at the one machine or the one machine part and emits a sharply focussed primary light beam,

   b) a beam receiver, which is rigidly mounted at the other machine or the other machine part and receives the light beam under conditions of incidence, which are dependent on the relative position of the machines or the machine parts, and which produces electrical signals with position characteristic magnitudes ($I_1$, $I_2$, $I_3$, $I_4$) in dependence on the conditions of incidence,

   c) an electronic data processing installation (15), which evaluates the electrical signals of the beam receiver, with alpha-numeric indicator (16) for the recallable representation of information data about the relative position and/or changes in the relative position and/or correction measures for the elimination of changes in the relative position and, in a given case, other information data determined from further entered signals and/or data, characterised thereby, that

d) an equipment (20 to 22) for the production of an intensity characteristic magnitude ($I_5$) is provided and so arranged and constructed that the intensity characteristic magnitude ($I_5$) is formed out of the signals with the position characteristic magnitudes ($I_1$, $I_2$, $I_3$, $I_4$) supplied by the beam receiver and either depends on the intensity of the received secondary light beam or indicates whether a secondary light beam is being received and that the data processing installation is so constructed that it draws on this intensity characteristic magnitude ($I_5$) for the cyclical recall of the information data.

3. Electro-optical equipment according to claim 1 or 2, characterised thereby, that at least the machine (3) or the machine part, which carries the beam receiver (11), stands fixed in space and that the data processing installation (15) is combined with the alphanumeric indicator (16) and the beam receiver (11) into one constructional unit.

4. Electro-optical equipment according to one of the preceding claims, characterised thereby, that the beam receiver (11) is combined with equipments for the monitoring of the operational state of the electro-optical system which supplies electrical signals with state characteristic magnitudes, which are characteristic of the operational state, to the data processing installation (15), which processes these into corresponding recallable information data.

5. Electro-optical equipment according to one of the preceding claims, characterised thereby, that the electronic data processing installation (15) is so programmed that a preset information item is recalled as initial information for a subsequent cyclical recall of preset sequence for representation on the alpha-numeric indicator (16) when the intensity characteristic magnitude ($I_5$) has had a preset value over a predetermined time span.

## Revendications

1. Dispositif électro-optique pour réaliser le contrôle permanent de la position spatiale relative de deux machines (3, 4) ou de pièces de machines, comportant

a) un émetteur de rayonnement (10), monté rigidement sur l'une des machines (3) ou sur une des pièces de machine et émettant un faisceau de lumière primaire (S) finement focalisé,

b) un système de miroirs (7, 8), qui est monté rigidement sur l'autre machine (4) ou l'autre pièce de machine, reçoit le faisceau de lumière primaire (S) et le réfléchit en tant que faisceau de lumière secondaire (S') d'une manière dépendant de la position relative,

c) un récepteur de rayonnement (11), qui est monté sur la première machine (3) ou sur la première pièce de machine, reçoit le faisceau de lumière secondaire (S') et produit des signaux électriques présentant des paramètres de position dépendant des conditions d'incidence du faisceau, et

d) une installation électronique de traitement des données (15), qui évalue les signaux électriques du récepteur de rayonnement (11) et comporte un dispositif d'affichage numérique (16) permettant de représenter, d'une manière pouvant être interrogée, des informations concernant la position relative et/ou des modifications de la position relative et/ou des dispositions de correction permettant d'éliminer des variations de la position relative et éventuellement d'autres informations déterminées à partir d'autres signaux et/ou données introduits, caractérisé par le fait

e) qu'il est prévu un dispositif (20-22) servant à produire une grandeur caractéristique d'intensité ($I_5$) et disposé et agencé de sorte que la grandeur caractéristique d'intensité ($I_5$) est formée à partir des signaux délivrés par le récepteur de rayonnement (11) présentant les grandeurs caractéristiques de position ($I_1$, $I_2$, $I_3$, $I_4$) et dépend de l'intensité du faisceau de lumière secondaire reçu (S') ou indique si un faisceau de lumière secondaire (S') est reçu, et que l'installation de traitement de données (15) est agencée de telle sorte qu'elle utilise cette grandeur caractéristique d'intensité ($I_5$) pour l'interrogation cyclique des informations.

2. Dispositif électro-optique pour réaliser le contrôle permanent de la position spatiale relative de deux machines (3, 4) ou de pièces de machines, comportant

a) un émetteur de rayonnement (10), monté rigidement sur l'une des machines (3) ou sur une des pièces de machine et émettant un faisceau de lumière primaire (S) finement focalisé,

b) un récepteur de rayonnement qui est monté sur l'autre machine ou l'autre pièce de machine, reçoit le faisceau de lumière dans des conditions d'incidence qui dépendent de la position relative des machines et des pièces de machines, et produit des signaux électriques possédant des grandeurs caractéristiques de position ($I_1$, $I_2$, $I_3$, $I_4$), qui dépendent des conditions d'incidence, et

c) une installation électronique de traitement des données (15), qui évalue les signaux électriques du récepteur de rayonnement (11) et comporte un dispositif d'affichage numérique (16) permettant de représenter, d'une manière pouvant être interrogée, des informations concernant la position relative et/ou des modifications de la position relative et/ou des dispositions de correction permettant d'éliminer des variations de la position relative et éventuellement d'autres informations déterminées à partir d'autres signaux et/ou données introduits, caractérisé par le fait

d) qu'il est prévu un dispositif (20-22) servant à produire une grandeur caractéristique d'intensité ($I_5$) et disposé et agencé de sorte que la grandeur caractéristique d'intensité ($I_5$) est formée à partir des signaux délivrés par le récepteur de rayonnement (11) présentant les grandeurs caractéristiques de position ($I_1$, $I_2$, $I_3$, $I_4$) et dépend de l'intensité du faisceau de lumière secondaire reçu (S') ou indique si un faisceau de lumière secondaire (S') est reçu, et que l'installation de traitement de données (15) est agèncée de telle sorte qu'elle utilise cette grandeur caractéristique d'intensité ($I_5$) pour l'interrogation cyclique des informations.

3. Dispositif électro-optique suivant la revendication 1 ou 2, caractérisé par le fait qu'au moins la machine (3) ou la pièce de machine, qui porte le récepteur de rayonnement (11), est fixe dans l'espace et que l'installation de traitement de données (15), le dispositif d'affichage alphanumérique (16) et le récepteur de rayonnement (11) sont rassemblés pour former une unité de construction.

4. Dispositif électro-optique suivant l'une des revendications précédentes, caractérisé par le fait que le récepteur de rayonnement (11) est combiné à des dispositifs servant à contrôler l'état de fonctionnement du système électro-optique et envoie les signaux électriques possédant les grandeurs caractéristiques d'état, qui sont caractéristiques de l'état de fonctionnement, à l'installation de traitement de données (15), qui traite ces signaux pour les transformer en des informations correspondantes pouvant être interrogées.

5. Dispositif électro-optique suivant l'une des revendications, caractérisé par le fait que l'installation électronique de traitement de données (15) est programmée de telle sorte qu'une information prédéterminée est appelée, en tant qu'information de sortie pour une interrogation cyclique ultérieur d'une séquence prédéterminée pour sa représentation sur le dispositif d'affichage alphanumérique (16), lorsque la grandeur caractéristique d'intensité ($I_5$) a atteint une valeur prédéterminée pendant un intervalle de temps prédéterminé.

Fig. 1

**Fig.** 2a

Einfallsrichtung
von S'

**Fig.** 2 b

S'
Lichteinfall

Au-Deckschicht

**Fig.** 2c

FIG. 3